# EUROPÄISCHE PATENTSCHRIFT

(11) **EP 2 651 610 B1**
(45) Veröffentlichungstag und Bekanntmachung des Hinweises auf die Patenterteilung: **06.08.2014**
(21) Anmeldenummer: 11794159.1
(22) Anmeldetag: 09.12.2011
(51) Int. Cl.: B25J 19/00

(54) **Handhabungseinrichtung, insbesondere Handhabungsroboter, mit einer Einrichtung zum Abführen von Wärme aus der Handhabungseinrichtung und Verwendung der Handhabungseinrichtung**
Handling device, in particular handling robot, with a device for removing heat from the handling device and use of the handling device
Dispositif de manipulation, notamment robot de manipulation, muni d'un dispositif pour évacuer la chaleur du dispositif de manipulation et utilisation du dispositif de manipulation

(30) Priorität: 16.12.2010 DE 102010063223
(43) Veröffentlichungstag der Anmeldung: 23.10.2013
(73) Patentinhaber: Robert Bosch GmbH, 70442 Stuttgart (DE)
(72) Erfinder: SCHLAICH, Peter, 71229 Leonberg (DE); PFEIFFER-SCHEER, Corinna, 71679 Asperg (DE)
(86) Internationale Anmeldenummer: PCT/EP2011/072346
(87) Internationale Veröffentlichungsnummer: WO 2012/080134

(56) Entgegenhaltungen:
- EP-A1- 0 203 202
- EP-A1- 1 541 296
- EP-A2- 1 323 503
- JP-A- 4 372 390
- JP-A- 7 246 587

## Beschreibung

### Stand der Technik

Die Erfindung betrifft eine Handhabungseinrichtung, insbesondere einen Handhabungsroboter, mit einer Einrichtung zum Abführen von Wärme aus der Handhabungseinrichtung nach dem Oberbegriff des Anspruchs 1. Ferner betrifft die Erfindung die Verwendung einer erfindungsgemäßen Handhabungseinrichtung.

Eine Handhabungseinrichtung mit einer Einrichtung zum Abführen von Wärme nach dem Oberbegriff des Anspruchs 1 ist aus der JP 4 372 390 A bekannt. Bei der bekannten Handhabungseinrichtung sind die wärmeerzeugenden Antriebseinrichtungen mit einer Spül- bzw. Absaugeinrichtung wirkverbunden angeordnet, wobei schlauch- oder rohrförmige Elemente vorgesehen sind, die die dort entstandene Wärme aus der Handhabungseinrichtung ausleitet. Dadurch ist eine gezielte Ableitung von Wärme aus dem Bereich von wärmeerzeugenden Einrichtungen innerhalb der Handhabungseinrichtung, insbesondere der Wärme von Antriebseinrichtungen, möglich. Die Elemente sind mit Perforationen ausgebildet wobei die Perforationen lediglich im Bereich der Antriebseinrichtungen ausgebildet bzw. angeordnet sind und jeweils dieselbe Größe aufweisen.

Aus der EP 1 323 503 A2 ist darüber hinaus eine Handhabungseinrichtung mit einer Verkleidung bekannt, die die Struktur der Handhabungseinrichtung umgibt.

Eine Kühleinrichtung zum Abführen von Wärme aus der Handhabungseinrichtung ist dieser Schrift jedoch nicht entnehmbar.

Darüber hinaus ist es aus der DE 20 2005 002 475 U1 bekannt geworden, an einem Industrieroboter eine kollisionskraftmindernde Schaumstoffabdeckung vorzusehen. Bei einer derartigen Ausgestaltung eines Industrieroboters ergibt sich die Problematik, dass Wärme nur in einem gewissen, beschränktem Maß an die Umgebung abgegeben werden kann, da die Schaumstoffabdeckung eine Isolation der Handhabungseinrichtung bewirkt. Dadurch ist die Belastung der in der Handhabungseinrichtung angeordneten Bauteile durch die relativ hohe Innentemperatur der Handhabungseinrichtung erhöht, was insbesondere bei elektronischen Bauteilen kritisch sein kann.

Derartige Handhabungseinrichtungen werden beispielsweise als vollautomatisierter Handhabungsroboter zur Montage von Bauteilen in Fertigungshallen eingesetzt. Im einfachsten Fall wird dabei die Wärme der Antriebe über eine Wärmeabstrahlung der Struktur der Handhabungseinrichtung an die Umgebung abgeführt. Typische wärmeerzeugende Einrichtungen sind dabei insbesondere die erwähnten Antriebe der Handhabungseinrichtung, die beispielsweise zum Bewegen von Greifarmen oder dem Schwenken von Werkstücken oder ähnlichem, benötigt werden. Neben der reinen Abstrahlung der Wärme über die Struktur der Handhabungseinrichtung wird auch Wärme an die Umgebung der Handhabungseinrichtung abgegeben, indem die in der Handhabungseinrichtung befindliche Luft durch die wärmeerzeugende Einrichtung erwärmt wird und insbesondere durch Undichtigkeiten, beispielsweise im Bereich von Achsantrieben oder ähnlichem, aus der Handhabungseinrichtung entweicht.

Problematisch ist darüber hinaus, dass über die üblicherweise Undichtigkeiten aufweisenden Achsantriebe von Handhabungseinrichtungen, insbesondere beim Einsatz der Handhabungseinrichtungen in z.B. staubigen Produktionsstätten, Staub, Schmutz oder ähnliches in das Innere der Handhabungseinrichtung gelangt, wodurch die Funktionsfähigkeit bzw. die Lebensdauer der Handhabungseinrichtung reduziert ist. Beim Einsatz von Handhabungseinrichtungen in einem Produktionsraum, der erhöhte Luftreinheitsanforderungen stellt, beispielsweise in Produktionsräumen in der pharmazeutischen Industrie oder der Halbleiterindustrie, besteht hingegen die Gefahr, dass über die angesprochenen Undichtigkeiten der Handhabungseinrichtung kontaminierte Luft aus dem Inneren der Struktur der Handhabungseinrichtung in die Fertigungseinrichtung bzw. den Produktionsraum gelangt.

### Offenbarung der Erfindung

Ausgehend von dem dargestellten Stand der Technik liegt der Erfindung die Aufgabe zugrunde, eine Handhabungseinrichtung mit einer Einrichtung zum Abführen von Wärme aus der Handhabungseinrichtung nach dem Oberbegriff des Anspruchs 1 derart weiterzubilden, dass in Verbindung mit einer die Struktur der Handhabungseinrichtung umgebenden Verkleidung eine möglichst gute Wärmeabfuhr aus der Handhabungseinrichtung ermöglicht wird.

Diese Aufgabe wird bei einer Handhabungseinrichtung mit einer Einrichtung zum Abführen von Wärme aus der Handhabungseinrichtung mit den Merkmalen des Anspruchs 1 dadurch gelöst, dass sich die Größe bzw. der Durchmesser bzw. die Anzahl der Perforationen in Längsrichtung des Elements verändert, und dass die Struktur von einer sensorisch als Kollisionsschutz wirkenden Verkleidung umgeben ist. Dadurch wird über die gesamte Erstreckung des Elementes eine Möglichkeit der Absaugung von erwärmter Luft bzw. zum Zuführen von kühlender Luft an kritischen Stellen ermöglicht.

Vorteilhafte Weiterbildungen der erfindungsgemäßen Handhabungseinrichtung mit einer Einrichtung zum Abführen von Wärme aus der Handhabungseinrichtung sind in den Unteransprüchen angegeben.

Eine konstruktiv besonders einfache Ausgestaltung der Erfindung, die bei luftdichten Strukturen der Handhabungseinrichtung einen genügend großen Luftstrom erzeugt, um die in der Struktur erzeugte Wärme zumindest in Bereiche abzuführen, in der die Wärme keinen Schaden bzw. keine negativen Auswirkungen hat, wird erzielt, wenn die Struktur als zumindest annähernd luftdichte Struktur ausgebildet ist und wenn die Saug- oder Überdruckeinrichtung insbesondere im Bereich einer Säule mit der Struktur verbunden ist.

Bekannt sind Handhabungseinrichtungen, die beispielsweise einen pneumatisch betriebenen Greifarm aufweisen. Ein derartiger, pneumatisch betriebener Greifarm wird mittels eines Verbindungsschlauchs betätigt bzw. angesteuert, über den Unter- bzw. Überdruck zu dem Greifarm geleitet wird. In einer weiteren Ausgestaltung der Erfindung ist es daher vorgesehen, dass das Element eine Verbindung zu einem pneumatisch betriebenen Antrieb der Handhabungseinrichtung ist. Das bedeutet, dass der sowieso zur Bedienung des Antriebs erforderliche Schlauch gleichzeitig zum Abführen der Wärme benutzt wird. Dadurch ist insbesondere im Innenraum der Struktur der Handhabungseinrichtung kein erhöhter Raumbedarf erforderlich, und die zusätzlichen Investitionskosten erhöhen sich nur minimal.

Die Erfindung umfasst auch die Verwendung einer erfindungsgemäßen Handhabungseinrichtung in Räumen mit erhöhten Luftreinheitsanforderungen, insbesondere in Reinräumen sowie die Verwendung in kontaminierten Räumen.

Weitere Vorteile, Merkmale und Einzelheiten der Erfindung ergeben sich aus der nachfolgenden Beschreibung bevorzugter Ausführungsbeispiele sowie anhand der Zeichnung.

Diese zeigt in:
Fig. 1 eine vereinfachte Darstellung einer als Handhabungsroboter ausgebildeten Handhabungseinrichtung in einem Reinraum und
Fig. 2 einen Ausschnitt aus der erfindungsgemäßen Handhabungseinrichtung.

Gleiche Bauteile bzw. Bauteile mit gleicher Funktion sind in den Figuren mit denselben Bezugsziffern versehen.

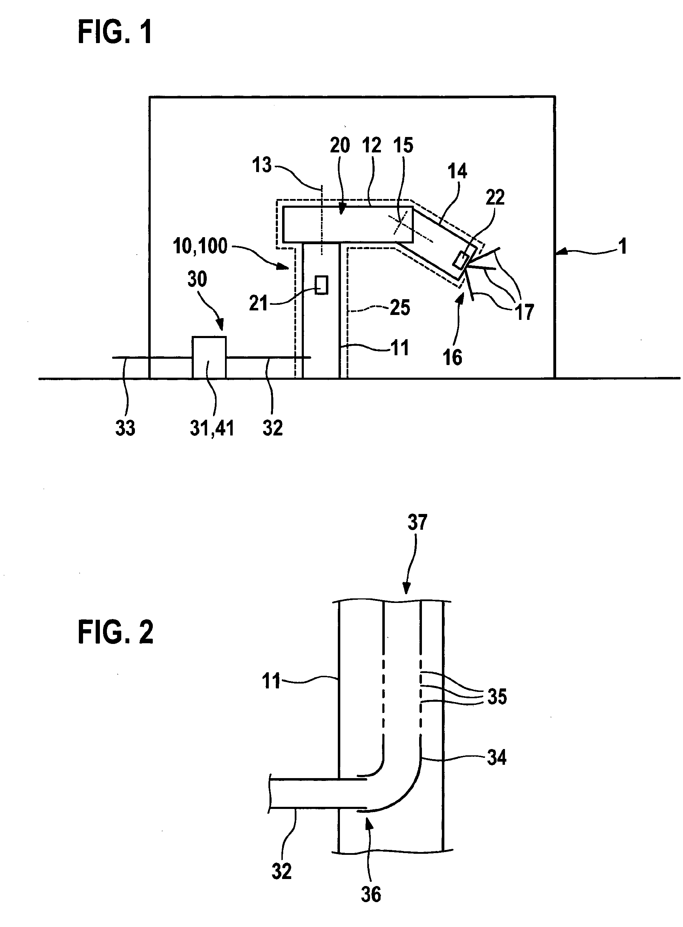

In der Fig. 1 ist eine automatisierte Handhabungseinrichtung 100 in Form eines Handhabungsroboters 10 vereinfacht dargestellt. Der Handhabungsroboter 10 dient beispielhaft und daher nicht einschränkend der Montage bzw. dem Zusammenfügen von Teilen in einem Produktionsraum 1.

Der Handhabungsroboter 10 weist eine Säule 11 auf, die mit dem Boden des Produktionsraumes 1 verbunden ist. An der oberen Stirnseite der Säule 11 ist ein erster Schwenkarm 12 angeordnet, der in einer Drehachse 13 schwenkbar gelagert ist. An dem ersten Schwenkarm 12 ist auf der der Säule 11 abgewandten Seite ein zweiter Schwenkarm 14 angeordnet, der in einer Drehachse 15 schwenkbar ist. Der zweite Schwenkarm 14 trägt beispielhaft eine Greifeinrichtung 16 mit Greiffingern 17. Die soweit beschriebenen Bauteile des Handhabungsroboters 10 bilden die (äußere) Struktur 20 des Handhabungsroboters 10 aus. Innerhalb der Struktur 20 des Handhabungsroboters, d.h. z.B. innerhalb der Säule 11 bzw. des zweiten Schwenkarms 14 sind wärmeerzeugende Einrichtungen in Form von Antrieben 21, 22 angeordnet. Der erste Antrieb 21 dient dabei beispielhaft der Drehung des ersten Schwenkarms 12 auf der Säule 11, während der zweite Antrieb 22 beispielsweise als pneumatischer Antrieb 22 zum Betätigen der Greiffinger 17 des Greifarms 16 dient.

Die Struktur 20 ist von einer lediglich angedeuteten sensorischen Verkleidung 25 umgeben-ist. Die Verkleidung 25 umgibt dabei die Struktur 20 wenigstens teilweise, vorzugsweise jedoch vollständig, und dient dazu, bei einer sich abzeichnenden Kollision des Handhabungsroboters 10, beispielsweise mit in der Nähe des Handhabungsroboters 10 befindlichen Gegenständen oder Personen, den Betrieb des Handhabungsroboters 10 entsprechend anzupassen, beispielsweise zu stoppen. Hierzu umfasst die Verkleidung 25 nicht dargestellte sensorische Einrichtungen, beispielsweise Näherungssensoren, Deformationssensoren oder ähnliches.

Zum Abführen der Wärme von den wärmeerzeugenden Antrieben 21, 22 weist der Handhabungsroboter 10 eine Einrichtung 30 auf. Die Einrichtung 30 umfasst in dem in der Fig. 1 dargestellten Ausführungsbeispiel eine Saugeinrichtung 31, die über eine erste Leitung 32 mit der Säule 11 verbunden ist bzw. in dieser mündet. Eine zweite Leitung 33 verbindet die Saugeinrichtung 31 mit einer Umgebung außerhalb des Produktionsraums 1. Die erste Leitung 32 ist mit der Säule 11 dichtend verbunden und ragt nur ein geringes Maß in die Säule 11 hinein (Fig.2). Mittels der Saugeinrichtung 31 wird innerhalb der Struktur 20 befindliche, durch die Antriebe 21, 22 erwärmte Luft aus der Struktur 20 abgesaugt und an die Umgebung außerhalb des Produktionsraums 1 abgegeben. Entsprechend der Fig. 2 ist die erste Leitung 32 mit einem innerhalb der Struktur 20 angeordneten hohlen Element 34, beispielsweise einem flexiblen Schlauch oder einem Rohr, gekoppelt. Das Element 34 kann dabei einen Innendurchmesser zwischen 1 mm und 5mm, insbesondere zwischen 3mm und 4mm, aufweisen. Ferner sind in der Wand des Elements 34 Perforationen 35 ausgebildet, deren Anordnung bzw. Größe derart ist, dass insbesondere die Luft im Bereich der wärmeerzeugenden Antriebe 21, 22 abgesaugt werden kann.

Es ist auch vorgesehen, dass die Perforationen 35 hinsichtlich ihrer Anzahl sowie Größe in Richtung von der Anschlussstelle 36 zum Schlauchende 37 hin stetig zunehmen, um innerhalb der Struktur 20 an jeder Stelle der Struktur 20 eine gleichmäßige Absaugung der Luft zu ermöglichen.

Eine Ausbildung der Einrichtung 30, bei der eine Saugeinrichtung 31 zum Abführen der Wärme von den wärmeerzeugenden Antrieben 21, 22 vorgesehen ist, findet bevorzugt Verwendung bei dichten Strukturen 20. Hierbei sind insbesondere die Achsantriebe, d.h. die Verbindungsstellen zwischen der Säule 11 und dem ersten Schwenkarm 12, dem ersten Schwenkarm 12 und dem zweiten Schwenkarm 14, sowie dem zweiten Schwenkarm 14 und dem Greifarm 16 dicht ausgebildet. Darüber hinaus wird eine Saugeinrichtung 31 auch bei nicht dichten Strukturen 20 verwendet, wenn sich der Handhabungsroboter 10 innerhalb eines erhöhte Reinheitsanforderungen aufweisenden Produktionsraum 1 befindet. Beispielhaft seien hierbei Produktionsräume 1 in der pharmazeutischen Industrie oder aber bei der Verarbeitung von Halbleiterelementen genannt. In diesem Fall wird durch die Verwendung einer Saugeinrichtung 31 sichergestellt, dass der Handhabungsroboter 10 seine Abwärme nicht in den Produktionsraum 1 abgibt. Darüber hinaus ist eine Saugeinrichtung 31 auch dann sinnvoll, wenn die angesprochene Sensorhaut 25 verwendet wird, da diese üblicherweise eine thermische Abschirmwirkung der Struktur 20 nach außen hin bewirkt, die ein Abgeben bzw. Abstrahlen der Wärme der wärmeerzeugenden Antriebe 21, 22 zumindest erschwert.

Bei dem oben beschriebenen Ausführungsbeispiel ist das Element 34 als separates, zusätzliches Element 34 ausgebildet. Es ist jedoch auch denkbar bzw. sinnvoll, das Element 34 gleichzeitig für den Antrieb beispielsweise des zweiten Antriebs 22 für den Greifarm 16 zu verwenden. In diesem Fall dient das Element 34 der Ansteuerung bzw. Versorgung des pneumatisch betriebenen Greifarms 16. Das Element 34 weist dann die (zusätzlichen) Perforationen 35 auf, wobei dies bei der Auslegung bzw. Betätigung des pneumatischen Antriebs des Greifarms 16 selbstverständlich zu berücksichtigen ist.

Wenn der Produktionsraum 1 ein Raum ist, bei dem die Luftqualität infolge von Partikeln, z.B. mit Staub, oder durch aggressive Medien belastet ist, ist es sinnvoll, anstelle einer Saugeinrichtung 31 eine Überdruckeinrichtung 41 zur Erzeugung von Druckluft zu verwenden. Auch diese Überdruckeinrichtung 41 ist bevorzugt mit einer zweiten Leitung 33 versehen, die (saubere) Luft aus einem Bereich außerhalb des Produktionsraums 1 ansaugt. Bei der Verwendung einer Überdruckeinrichtung 41 zur Erzeugung von Druckluft ist es sinnvoll bzw. erforderlich, dass die Struktur 20 Undichtigkeiten aufweist, damit die von der Überdruckeinrichtung 41 in die Struktur 20 eingeblasene Druckluft aus der Struktur 20 entweichen kann. Dies erfolgt üblicherweise über die Undichtigkeiten im Bereich der angesprochenen Achsantriebe. Dies hat den besonderen Vorteil, dass durch die Verwendung von Druckluft aus dem Produktionsraum 1 keine belastete Luft in die Struktur 20 eintreten kann, d.h. insbesondere, dass die Achsantriebe beispielsweise durch die Druckluft vor dem Zutritt von Staub oder ähnlichem geschützt werden.

Die soweit beschriebene Handhabungseinrichtung 100 bzw. der Handhabungsroboter 10 können in vielfältiger Art und Weise abgewandelt bzw. modifiziert werden, ohne vom durch die Ansprüche definierten Gegenstand abzuweichen.

## Patentansprüche

1. Handhabungseinrichtung (100), insbesondere Handhabungsroboter (10), mit einer Einrichtung (30) zum Abführen von Wärme aus der Handhabungseinrichtung (100), mit einer Struktur (20) der Handhabungseinrichtung (100) und wenigstens einer Wärme erzeugenden Einrichtung (21, 22), insbesondere einem Antrieb der Handhabungseinrichtung (100), wobei eine Saug- oder Überdruckeinrichtung (31, 41) zum Abführen bzw. Zuführen von Luft vorgesehen ist, die in Wirkverbindung mit der wenigstens einen Wärme erzeugenden Einrichtung (21, 22) angeordnet ist, und wobei innerhalb der Struktur (20) ein mit der Saug- oder Überdruckeinrichtung (31, 41) gekoppeltes, insbesondere schlauch- oder rohrförmiges Element (34) vorgesehen ist, das in Wirkverbindung mit den im Innern der Struktur (20) angeordneten, Wärme erzeugenden Einrichtung (21, 22) steht, wobei das Element (34) in Längserstreckung des Elements (34) eine Vielzahl von Perforationen (35) aufweist, **dadurch gekennzeichnet, dass** sich die Größe bzw. der Durchmesser bzw. die Anzahl der Perforationen (35) in Längsrichtung des Elements (34) verändert, und dass die Struktur (20) von einer sensorisch als Kollisionsschutz wirkenden Verkleidung (25) umgeben ist.

2. Handhabungseinrichtung nach Anspruch 1,
**dadurch gekennzeichnet,**
**dass** die Struktur (20) als zumindest annähernd luftdichte Struktur (20) ausgebildet ist, und dass die Saug- oder Überdruckeinrichtung (31, 41) insbesondere im Bereich einer Säule (11) mit der Struktur (20) verbunden ist.

3. Handhabungseinrichtung nach Anspruch 1 oder 2,
**dadurch gekennzeichnet,**
**dass** das Element (34) als flexibler Schlauch ausgebildet ist und einen Innendurchmesser von 1 mm-5mm, insbesondere von 3mm-4mm aufweist.

4. Handhabungseinrichtung nach einem der Ansprüche 1 bis 3,
**dadurch gekennzeichnet,**
**dass** das Element (34) eine Verbindung zu einem pneumatisch betriebenen Antrieb (22) der Handhabungseinrichtung (100) ist.

5. Verwendung einer Handhabungseinrichtung (100) nach einem der Ansprüche 1 bis 4 in Räumen mit erhöhten Luftreinheitsanforderungen, insbesondere in Reinräumen, wobei die Einrichtung (30) eine Saugeinrichtung (31) umfasst.

6. Verwendung einer Handhabungseinrichtung (100) nach einem der Ansprüche 1 bis 4 in durch Partikeln oder aggressiven Medien kontaminierten Räumen, wobei die Einrichtung (30) eine Überdruckeinrichtung (41) umfasst.

## Claims

1. Handling device (100), in particular handling robot (10), with a device (30) for discharging heat from the handling device (100), with a structure (20) of the handling device (100) and at least one heat-generating device (21, 22), in particular a drive of the handling device (100), wherein a suction or positive-pressure device (31, 41) for discharging or delivering air is provided which is arranged in operative connection with the at least one heat-generating device (21, 22), and wherein an element (34), in particular a hose-like or tubular element, coupled with the suction or positive-pressure device (31, 41) is provided within the structure (20), which element is in operative connection with the heat-generating device (21, 22) arranged inside the structure (20), wherein the element (34) has a multiplicity of perforations (35) in the longitudinal extent of the element (34), **characterized in that** the size or the diameter or the number of perforations (25) changes in the longitudinal direction of the element (34), and **in that** the structure (20) is encompassed by a cladding (25) acting sensorially as collision protection.

2. Handling device according to Claim 1, **characterized in that** the structure (20) is designed as an at least approximately air-tight structure (20), and **in that** the suction or positive-pressure device (31, 41) is connected to the structure (20), in particular in the region of a column (11).

3. Handling device according to Claim 1 or 2, **characterized in that** the element (34) is designed as a flexible hose and has an inside diameter of 1 mm - 5 mm, in particular of 3 mm - 4 mm.

4. Handling device according to one of Claims 1 to 3, **characterized in that** the element (34) is a connection to a pneumatically operated drive (22) of the handling device (100).

5. Use of a handling device (100) according to one of Claims 1 to 4, in spaces with increased air purity requirements, in particular in clean rooms, wherein the device (30) comprises a suction device (31).

6. Use of a handling device (100) according to one of Claims 1 to 4, in spaces contaminated by particles or aggressive media, wherein the device (30) comprises a positive-pressure device (41).

## Revendications

1. Dispositif de manipulation (100), en particulier robot de manipulation (10), comprenant un dispositif (30) pour dissiper de la chaleur hors du dispositif de manipulation (100), comprenant une structure (20) du dispositif de manipulation (100) et au moins un dispositif produisant de la chaleur (21, 22), en particulier un entraînement du dispositif de manipulation (100), un dispositif d'aspiration ou de surpression (31, 41) pour évacuer ou fournir de l'air étant prévu, lequel est disposé en liaison fonctionnelle avec l'au moins un dispositif produisant de la chaleur (21, 22), et un élément (34) notamment en forme de tube ou de tuyau, accouplé au dispositif d'aspiration ou de surpression (31, 41), étant prévu à l'intérieur de la structure (20), lequel est en liaison fonctionnelle avec le dispositif (21, 22) produisant de la chaleur disposé à l'intérieur de la structure (20),
l'élément (34) présentant, dans l'étendue longitudinale de l'élément (34), une pluralité de perforations (35),
**caractérisé en ce que** la taille ou le diamètre ou le nombre des perforations (35) varient dans la direction longitudinale de l'élément (34), et **en ce que** la structure (20) est entourée par un habillage (25) agissant par un moyen de capteur en tant que protection contre les collisions.

2. Dispositif de manipulation selon la revendication 1,
**caractérisé en ce que** la structure (20) est réalisée sous forme de structure (20) au moins approximativement étanche à l'air, et **en ce que** le dispositif d'aspiration ou de surpression (31, 41) est connecté à la structure (20), en particulier dans la région d'une colonne (11).

3. Dispositif de manipulation selon la revendication 1 ou 2,
**caractérisé en ce que**
l'élément (34) est réalisé sous forme de tuyau flexible et présente un diamètre intérieur de 1 mm - 5 mm, en particulier de 3 mm - 4 mm.

4. Dispositif de manipulation selon l'une quelconque des revendications 1 à 3,
**caractérisé en ce que**
l'élément (34) est une connexion à un entraînement (22) à commande pneumatique du dispositif de manipulation (100).

5. Utilisation d'un dispositif de manipulation (100) selon l'une quelconque des revendications 1 à 4 dans des espaces exigeant une grande pureté de l'air, en particulier dans des espaces propres, le dispositif (30) comprenant un dispositif d'aspiration (31).

6. Utilisation d'un dispositif de manipulation (100) selon l'une quelconque des revendications 1 à 4 dans des espaces contaminés par des particules ou des milieux agressifs, le dispositif (30) comprenant un dispositif de surpression (41).
